(19) Europäisches Patentamt
European Patent Office
Office européen des brevets

(11) EP 3 380 575 B1

(12) **FASCICULE DE BREVET EUROPEEN**

(45) Date de publication et mention de la délivrance du brevet:
**25.09.2019 Bulletin 2019/39**

(21) Numéro de dépôt: **16815585.1**

(22) Date de dépôt: **17.11.2016**

(51) Int Cl.:
***C09D 127/16*** (2006.01) ***H01M 4/62*** (2006.01)
***C08L 27/16*** (2006.01) ***C08L 33/12*** (2006.01)
***C08K 3/04*** (2006.01) ***C08K 3/22*** (2006.01)
***H01M 4/13*** (2010.01)

(86) Numéro de dépôt international:
**PCT/FR2016/052996**

(87) Numéro de publication internationale:
**WO 2017/089683 (01.06.2017 Gazette 2017/22)**

(54) **LIANT CONTENANT DU POLY FLUORURE DE VINYLIDÈNE CAPABLE DE SE FIXER SUR UN MÉTAL ET ELECTRODE POUR BATTERIE LITHIUM-ION ASSOCIÉE**

ZUR ADHÄSION AUF METAL GEEIGNETES POLYVINYLIDENFLUORID-ENTHALTENDES BINDEMITTEL UND ELEKTRODE FÜR LITHIUM-IONEN-BATTERIE

BINDER COMPRISING POLYVINYLIDENE FLUORIDE ABLE TO FIX ON A METAL AND ELECTRODE FOR LITHIUM ION BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2015 FR 1561286**

(43) Date de publication de la demande:
**03.10.2018 Bulletin 2018/40**

(73) Titulaire: **Arkema France**
**92700 Colombes (FR)**

(72) Inventeurs:
- **BIZET, Stéphane**
**27170 Barc (FR)**
- **BONNET, Anthony**
**69720 Saint-Laurent-de-Mure (FR)**
- **CHAUVEAU, Jérôme**
**27410 Mesnil en Ouche (FR)**
- **RIVAS, Nadine**
**76500 La Londe (FR)**

(74) Mandataire: **Albani, Dalila**
**ARKEMA France**
**Département Propriété Industrielle**
**420, rue d'Estienne d'Orves**
**92705 Colombes Cedex (FR)**

(56) Documents cités:
**EP-A1- 0 730 316**
**WO-A1-2014/119790**
**WO-A1-2015/031430**

EP 3 380 575 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

## Description

La présente invention concerne un liant, permettant de fixer un matériau contenant du poly fluorure de vinylidène sur un métal et utilisable pour une électrode lithium-ion, ainsi que l'électrode associée.

Les batteries lithium-ion comportent une cathode qui comprend un mélange d'un oxyde métallique lithié, d'une charge conductrice (en général du noir de carbone) et d'un liant polymère. Ce mélange est déposé sur une feuille métallique, en général d'aluminium. Le liant polymère permet d'assurer la cohésion de la couche déposée et l'adhésion de cette dernière sur la feuille métallique.

Le document WO 2001/043214 décrit une cathode pour batterie lithium-ion qui comprend un liant à base de polymère fluoré et un promoteur de cohésion. Ce polymère fluoré peut être un homopolymère de difluorure de vinylidène ou un copolymère de difluorure de vinylidène et d'un monomère choisi parmi le tétrafluoroéthylène, l'hexafluoropropylène le trifluoroéthylène et le chlorotrifluoroéthylène. Le promoteur de cohésion est choisi parmi l'acide 5-sulfoisophtalique et ses sels métalliques. Cet additif est une petite molécule susceptible de migrer lors des cycles de charge/décharge. Par ailleurs, il subsiste un doute sur l'impact de ce type d'additif sur les performances électrochimiques.

Le document WO 9850479 décrit une électrode qui comprend un liant contenant un homopolymère de fluorure de vinylidène et un copolymère de fluorure de vinylidène, au moins l'un de ces polymères comprenant des groupes fonctionnels aptes à se fixer sur un métal.

Le document WO 9732347 décrit une électrode pour batterie comprenant un substrat formant électrode qui contient un liant qui sert à la fixation à la surface du collecteur de la batterie. Ce liant contient un homopolymère ou un copolymère de PVDF (poly fluorure de vinylidène) greffé avec au moins un polymère acrylique qui comprend des groupes esters d'acide acrylique et/ou d'acide méthacrylique, le taux massique de ce polymère acrylique greffé allant de 0,1 à 20% du liant.

Le document WO 9749777 décrit un liant utilisable pour la fixation sur un métal qui comprend un polymère de poly fluorure de vinylidène, un polymère acrylique ou méthacrylique comprenant des groupes fonctionnels aptes à se fixer sur un métal et un élastomère de type acrylique ou méthacrylique. Ce type de liant ne peut pas être utilisé dans une électrode de batterie lithium-ion car au contact de l'électrolyte, l'élastomère va gonfler et endommager l'électrode.

Le document US 2013/252077 décrit une électrode pour batterie lithium-ion fonctionnant avec un électrolyte non aqueux. Cette électrode comprend une substance active et un liant comprenant un polymère de fluorure de vinylidène et un polymère acrylique. Le taux massique de polymère acrylique varie de 40% à 90% et engendre donc des problèmes de détérioration de l'électrode du fait du gonflement du polymère acrylique précité, en contact permanent avec l'électrolyte, en particulier, lorsque la température dans l'électrode est plus élevée que la température ambiante.

Le document EP 2953193 décrit un liant pour batterie lithium-ion comprenant un polymère fluoré et un polymère acrylique contenant un groupe nitrile.

Le document WO 97/27260 décrit une électrode qui comprend un collecteur en métal revêtu d'une couche comprenant une substance active et un liant. Ce liant comprend au moins deux des trois composants suivants : un polymère de fluorure de vinylidène, un polymère acrylique ou méthacrylique comportant des groupes fonctionnels aptes à se fixer sur le métal et un copolymère de fluorure de vinylidène. Lorsque le liant ne comprend que le polymère de fluorure de vinylidène et le polymère acrylique ou méthacrylique, ce dernier est dans une proportion allant de 0,5% à 20% en masse de la masse totale du liant. Les copolymères de fluorure de vinylidène utilisés dans les exemples de ce document sont caractérisés par leur débit massique mesuré à 230°C. Il s'avère qu'en pratique la masse de liant utilisée doit être conséquente afin d'obtenir une bonne cohésion de la couche active et une bonne adhésion de cette dernière sur le collecteur métallique. Par ailleurs, on observe également un gonflement de la cathode au contact de l'électrolyte. Les copolymères de fluorure de vinylidène considérés dans ce document sont le Kynar® 500 et Kynar® 301 F. Ces copolymères présentent un indice de fluidité (MFR) mesuré à 1,2 g/10 minutes sous 12,5 kg ou 4 g/10 minutes sous 21,6 kg. Une solution de chacun de ces copolymères à une concentration de 5% en masse dans la N-méthyl-2-pyrrolidone présente une viscosité de 75 mPa.s à 23°C. Il s'avère que de telles valeurs de viscosité ne sont pas adaptées pour une utilisation d'un tel liant dans une batterie lithium-ion à un taux inférieur à 5% en poids dans la couche de substrat couvrant le collecteur métallique de la batterie.

Par ailleurs, il est connu d'utiliser en tant que liant pour les électrodes de batterie au lithium, un homopolymère de fluorure de vinylidène de haut poids moléculaire, dont une solution à 5% dans la N-méthyl-2-pyrrolidone présente une viscosité mesurée avec une vitesse de cisaillement imposée de 30 tours/ min supérieure à 100 mPa. Ce liant a le mérite de n'occasionner qu'un gonflement limité et de de présenter qu'un faible taux d'extractibles dans l'électrolyte, c'est-à-dire que lors de l'utilisation de l'électrode, une faible quantité de produits provenant du liant migrent dans l'électrolyte. Il procure une bonne adhésion du fait du haut poids moléculaire de l'homopolymère de PVDF précité. Par contre, ce même polymère ayant un haut poids moléculaire, il est donc très visqueux et il est par conséquent difficile d'étaler sur le collecteur métallique la pâte formée par le mélange de ce liant avec la substance active de l'électrode.

Un premier but de la présente invention est de proposer un nouveau liant polymérique permettant de fixer une couche de matériau contenant du PVDF sur du métal.

Un autre but de la présente invention est de proposer un liant tel que précité qui confère une bonne adhésion entre le métal et la couche de matériau contenant du PVDF.

Un autre but de l'invention est de proposer un liant qui lorsqu'il est utilisé dans une électrode de batterie lithium-ion occasionne un gonflement et une quantité de composés passant dans l'électrolyte, limités.

Un autre but de la présente invention est de proposer un liant qui, sous forme de film, occasionne un gonflement n'excédant pas 30% en volume après 24h d'immersion à 60°C dans un mélange carbonate d'éthyle/carbonate de diméthyle /carbonate de diéthyle de composition massique 1/1/1.

Un autre but de la présente invention est de proposer un liant qui permet d'étaler facilement sur le collecteur métallique la substance active et facilite ainsi la fabrication d'une électrode pour une batterie lithium-ion.

Un autre but de l'invention est de proposer un liant qui en mélange avec la charge active (ce mélange étant couramment dénommé « slurry ») puisse se conserver et présente une durée de « vie en pot » satisfaisante, compatible avec les temps imposés par le procédé de fabrication des électrodes de batterie.

Un autre but de l'invention est de proposer un liant qui comprend un taux de solvant organique réduit.

Un autre but de la présente invention est de fournir une électrode pour une batterie lithium-ion dont la couche de substance active ne se décolle pas du collecteur et/ou ne gonfle pas.

Un autre but de la présente invention est de fournir une électrode qui comporte un taux massique de liant relativement faible afin d'éviter les problèmes de gonflement précités et/ou de permettre d'augmenter le taux de charge active dans la cathode afin de maximiser la capacité des batteries.

La présente invention concerne un liant utilisable dans une batterie lithium-ion et comprenant au moins un polymère de fluorure de vinylidène et au moins un copolymère acrylique comportant des monomères portant des groupements fonctionnels présentant une affinité pour les métaux ou aptes à se fixer sur les métaux. Les groupements fonctionnels sont choisis parmi les groupements carboxyle, anhydride d'acide carboxylique,époxy, mercapto, sulfure et phénolique. Ledit copolymère acrylique est de préférence un copolymère de méthacrylate de méthyle et d'acide méthacrylique.

De manière caractéristique, selon l'invention, ledit polymère de fluorure de vinylidène est tel qu'une solution de N-méthyl-2-pyrrolidone contenant 5% en masse dudit polymère de fluorure de vinylidène présente une viscosité, mesurée avec une vitesse de cisaillement imposée de 30 tours/min, égale ou supérieure à 125 mPa.s, de préférence supérieure à 300 mPa.s, et inférieure à 1500 mPa.s, et de préférence inférieure à 1200 mPa.s.

La Demanderesse a en effet constaté qu'un liant tel que précité permet d'obtenir une bonne adhésion de la substance active sur une feuille métallique, en particulier sur une feuille d'aluminium.

La présence du copolymère acrylique facilite l'application de la substance active lors de la fabrication de l'électrode, du fait de la diminution de la viscosité du mélange liant-substance active.

Le mélange liant selon l'invention-charge active présente une durée de vie en pot satisfaisante allant de 1 heure à 24 heures et plus particulièrement de l'ordre d'une dizaine d'heures.

Par ailleurs, le liant précité n'occasionne qu'un gonflement réduit lors de son utilisation. En particulier, la Demanderesse a constaté que dans le cas d'un film de liant, le gonflement n'excédait pas 30% en volume après 24h d'immersion à 60°C dans un mélange carbonate d'éthyle/carbonate de diméthyle /carbonate de diéthyle de composition massique 1/1/1.

La Demanderesse a également mis en évidence que le taux de composés passant de la substance active dans l'électrolyte était réduit du fait notamment de la faible quantité de liant. En particulier, le liant de l'invention permet d'obtenir un taux de composés passant de la substance active dans l'électrolyte (encore dénommés extractibles) de l'ordre de 2%.

La Demanderesse a également mis en évidence qu'il est possible d'obtenir une bonne adhésion avec une quantité de liant limitée ce qui limite le gonflement et également la quantité de composés passant dans l'électrolyte.

De plus, du fait de la diminution de la viscosité du liant et donc du mélange liant-substance active, la quantité de solvant organique devant être utilisée pour la fabrication d'une électrode est réduite ; l'utilisation du liant selon l'invention est donc plus écologique.

Le liant de l'invention ne contient pas de polymère élastomère ou de copolymère élastomère, en particulier de (co)polymère élastomère de type acrylique et le polymère de type acrylique n'est pas un élastomère.

Le type de polymère de fluorure de vinylidène précité présente un poids molaire de l'ordre du million de grammes et est déjà utilisé en tant que liant pour les batteries lithium-ion. Son mélange avec un copolymère acrylique permet de réduire la viscosité du liant et donc celle de la pâte servant à fabriquer une électrode de batterie lithium-ion ; la fabrication de l'électrode est ainsi plus facile. Néanmoins, il n'était pas évident que l'ajout du polymère acrylique, certes fonctionnalisé, mais de masse molaire bien inférieure à celle du PVDF allait augmenter très significativement l'adhésion. En effet, il est connu de l'Homme du Métier que plus le liant présente une masse molaire élevée, plus l'adhésion de ce dernier sur la plaque métallique est satisfaisante, ce qui améliore également la cohésion de l'électrode comprenant ce liant.

De plus, la Demanderesse a également mis en évidence qu'il est possible de fabriquer des électrodes pour

des batteries lithium-ion qui contient une quantité moindre de liant, ce qui permet d'augmenter le taux de charge active dans la cathode et d'augmenter ainsi la capacité de charge de cette dernière.

De préférence, le polymère de fluorure de vinylidène est tel que viscosité de ladite solution de N-méthyl-2-pyrrolidone contenant 5% en masse dudit polymère de fluorure de vinylidène mesurée à 23°C avec une vitesse de cisaillement imposée de 30 tours/min est égale ou supérieure à 125 mPa.s et de préférence égale ou supérieure à 300 mPa et de préférence égale ou supérieure à 700 mPa.s et inférieure à 1500 mPa.s, et de préférence inférieure à 1200 mPa.s.

Selon un mode de réalisation particulier, le polymère de fluorure de vinylidène est tel que la viscosité de ladite solution de N-méthyl-2-pyrrolidone contenant 5% en masse dudit polymère de fluorure de vinylidène et mesurée à 23°C avec une vitesse de cisaillement imposée de 30 tours/min est égale à 150 mPa.s.

Selon un autre mode de réalisation, le polymère de fluorure de vinylidène est tel que la viscosité de ladite solution de N-méthyl-2-pyrrolidone contenant 5% en masse dudit polymère de fluorure de vinylidène et mesurée à 23°C avec une vitesse de cisaillement imposée de 30 tours/min est égale à 700 mPa.s.

Les groupements fonctionnels aptes à se fixer sur les métaux ou présentant une affinité pour ses derniers, sont bien connus de l'Homme du Métier. Il s'agit d'au moins un type de groupement choisi parmi les groupements suivants : carboxyle, anhydride d'acide carboxylique, époxy, mercapto, sulfure et phénolique.

Avantageusement, le copolymère acrylique comporte des monomères comprenant des groupements fonctionnels acide méthacrylique et de préférence seulement des groupements fonctionnels acide méthacrylique.

Le copolymère acrylique n'est pas limité selon l'invention. On désigne par le terme « copolymère acrylique » tout copolymère dérivé d'un monomère de formule suivante :

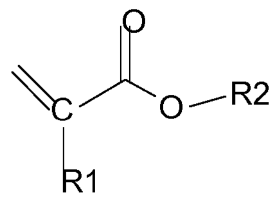

dans laquelle R1 est un atome d'hydrogène ou un groupement alkyle, de préférence un méthyle et R2 est un groupement alkyle éventuellement substitué.

Le copolymère acrylique ou le mélange de (co)polymères acryliques n'est pas un élastomère, c'est-à-dire qu'il ne présente pas une température de transition vitreuse inférieure à 20°C.

Avantageusement, le copolymère acrylique contient 10% en moles de monomères portant des groupements fonctionnels présentant une affinité pour les métaux ou aptes à se fixer sur les métaux et notamment 10% en moles de monomères portant des groupements acide méthacrylique. La Demanderesse a mis en évidence qu'un tel copolymère conférait une bonne adhésion au matériau le contenant et déposé sur une feuille de métal.

Avantageusement, le liant contient en masse un taux de copolymère acrylique égal ou supérieur à 0,1% et égal ou inférieur à 25%, en particulier inférieur ou égal à 20% et en particulier inférieur à 10%. En particulier, le liant contient un taux de copolymère acrylique égal ou supérieur à 2,5% et égal ou inférieur à 25%, de préférence égal ou inférieur à 20% et en particulier égal ou inférieur à 10%.

La présente invention concerne également une électrode pour batterie lithium-ion du type comportant un collecteur métallique dont au moins une face est recouverte d'une couche de substrat contenant une substance active et un liant qui de manière caractéristique comprend le liant selon l'invention ou est constitué du liant selon l'invention.

La substance active utilisable pour la formation de l'anode ou de la cathode est bien connue de l'Homme du Métier.

Avantageusement, ledit substrat contient en masse un taux dudit liant égal ou supérieur à 1% et égal ou inférieur à 5% et notamment égal à 3%. La Demanderesse a mis en évidence que ces faibles taux de liant permettent d'obtenir une bonne cohésion du substrat et une bonne adhésion de ce dernier sur le métal, en particulier l'aluminium.

L'électrode peut être une cathode et dans ce cas, le substrat peut contenir en tant que substance active un oxyde métallique lithié et éventuellement du noir de carbone.

L'électrode peut également être une anode et dans ce cas, ledit substrat peut contenir en tant que substance active au moins un ingrédient choisi parmi le coke, le noir de carbone, le graphite le charbon actif, et les fibres de carbone.

Dans toute la présente demande, la viscosité est mesurée à l'aide d'un viscosimètre rotatif Brookfield comprenant un mobile de type SC4-34.

La présente invention, ses caractéristiques et les divers avantages qu'elle procure apparaîtront mieux à la lecture des exemples qui suivent et qui sont proposés à titre d'exemples explicatifs et non limitatifs.

## EXEMPLES

Produits utilisés pour la composition des liants

- PVDF 1 : Homopolymère de fluorure de vinylidène caractérisé par une viscosité à l'état fondu mesurée selon l'ASTM D3835 comprise entre 4450 Pa.s et 5450 Pa.s à 230°C et 100 $s^{-1}$.
- PVDF 2: Homopolymère de fluorure de vinylidène caractérisé par une viscosité à l'état fondu mesurée selon l'ASTM D3835 comprise entre 3400 Pa.s et 4000 Pa.s à 230°C et 100 $s^{-1}$.
- PVDF 3 : Homopolymère de fluorure de vinylidène caractérisé par une viscosité à l'état fondu mesurée selon l'ASTM D3835 comprise entre 3000 Pa.s et 3300 Pa.s à 230°C et 100 $s^{-1}$.
- mélange de PVDF Kynar®HSV900 / Kynar®720 en proportion massique 1 :1 caractérisé par une viscosité à l'état fondu mesurée selon l'ASTM D3835 à 232°C et 100 $s^{-1}$ de 3800 Pa.s.
- CMM : Copolymère de méthacrylate de méthyle et d'acide méthacrylique. Ce copolymère contient 10% en mole d'acide méthacrylique. Il possède une viscosité intrinsèque de 27 $cm^3$/g.
- PMMA non fonctionnalisé : Polymère acrylique à base de méthacrylate de méthyle qui possède une viscosité intrinsèque de 46 $cm^3$/g. Ce polymère ne contient de co-monomère fonctionnalisé portant des fonctions carboxyle.

**Compositions des liants**

Le tableau I ci-dessous regroupe les différentes compositions de liant étudiées.

**Tableau I**

| | PVDF | Type de polymère acrylique | % en poids de PVDF | % en poids de polymère acrylique |
|---|---|---|---|---|
| Exemple 1 | PVDF1 | CMM | 80 | 20 |
| Exemple 2 | PVDF 1 | CMM | 90 | 10 |
| Exemple 3 | PVDF 1 | CMM | 97,5 | 2,5 |
| Exemple comparatif 1 | PVDF 1 | - | 100 | 0 |
| Exemple comparatif 2 | PVDF 2 | - | 100 | 0 |
| Exemple comparatif 3 | PVDF 3 | - | 100 | 0 |
| Exemple comparatif 4 | PVDF 1 | PMMA non fonctionnalisé | 90 | 10 |

Mesure de la viscosité de solution de liants dans la N-méthyl-2-pyrrolidone

On a mesuré la viscosité de solutions de la N-méthyl-2-pyrrolidone (NMP) contenant respectivement :

- 5% en masse de PVDF 1 seul (exemple comparatif 1 du Tableau I)
- 5% en masse de PVDF 2 seul (exemple comparatif 2 du Tableau I)
- 5% en masse de PVDF 3 seul (exemple comparatif 3 du Tableau I)
- 5% en masse d'un mélange PVDF Kynar® HSV900/Kynar® 720 ;
- 5% en masse d'un mélange de PVDF 1 et de CMM, ce dernier étant constitué de 90% en masse de PVDF 1 et 10% en masse de CMM (exemple 2 du Tableau I) ; et
- 5% en masse d'un mélange de PVDF 1 et de CMM, ce dernier étant constitué de 97,5% en masse de PVDF 1 et 2,5% en masse de CMM (exemple 3 du Tableau I)

La viscosité de chacune des solutions précitées a été mesurée à 23°C, à l'aide d'un viscosimètre Brookfield DV-II Pro, équipé d'un mobile de type SC4-34 avec une vitesse de rotation du mobile imposée à 30 tours par minute.

Les résultats obtenus figurent dans le Tableau II ci-dessous qui regroupe également les différentes compositions de liant. Le tableau II montre que l'ajout d'un copolymère acrylique porteur de groupes fonctionnels acide méthacrylique à un polymère PVDF permet de diminuer la viscosité du mélange PVDF-polymère acrylique par rapport au PVDF seul. Cette viscosité réduite permet d'étaler plus facilement le mélange qui forme le substrat contant la substance active de l'électrode. D'autre part, la viscosité de solution à 5% dans la N-méthyl-2-pyrrolidone d'un mélange PVDF Kynar®

HSV900/Kynar® 720 tel que divulgué dans le document EP 2953193 est de 80 mPa.s.

**Tableau II**

| | Viscosité de solution (mPa.s) |
|---|---|
| Exemple 2 | 450 |
| Exemple 3 | 620 |
| Exemple comparatif 1 | 700 |
| Exemple comparatif 2 | 150 |
| Exemple comparatif 3 | 75 |
| mélange PVDF Kynar®HSV900/Kynar® 720 | 80 |

## Elaboration de cathodes

En plus des liants polymères décrits précédemment, les produits suivants ont été utilisés pour l'élaboration de cathodes :

- Oxyde métallique lithié LiNMC 1 :1 :1 commercialisé par la société UMICORE sous le nom de MX10
- Noir de carbone Super P Li commercialisé par la société TIMCAL.

S'agissant du liant polymérique, on utilise les mêmes compositions que celles figurant dans le Tableau I.
La fabrication d'une cathode a été effectuée en suivant les étapes suivantes :

- On prépare une solution de liant polymère à 5% en masse dans la N-méthyl-2-pyrrolidone jusqu'à dissolution complète du liant polymère. Puis, on ajoute à cette solution du noir de carbone Super Pli. On mélange à l'aide d'un agitateur mécanique la solution. Puis on ajoute l'oxyde métallique lithié LiNMC MX10. On obtient une pâte qui contient en poids 94 parts de LiNMC, 3 parts de noir de carbone et 3 parts de liant pour 100 parts du mélange LiNMC/noir de carbone/liant. On dépose la pâte obtenue sur une feuille d'aluminium de façon à avoir une épaisseur humide de 350 $\mu$m. Puis on évapore la NMP en chauffant la feuille revêtue pendant 15 minutes à 90°C puis pendant 30 minutes à 150°C. On obtient ainsi un revêtement ayant une épaisseur de 110 $\pm$ 15 $\mu$m.

On constate que la pâte formée avec les liants des exemples 1 à 3 cités dans le Tableau I est plus facile à étaler sur la feuille d'aluminium.

## Mesure de l'adhésion

On mesure ensuite l'adhésion entre la couche formée du mélange LiNMC/noir de carbone/liant et la feuille d'aluminium. Pour ce faire, on découpe une bandelette de 25 mm de large. Cette bandelette est ensuite collée sur une plaque d'aluminium rigide à l'aide d'un adhésif double-face, l'adhésif étant déposé du côté du revêtement LiNMC/noir de carbone/liant. Le test de pelage est réalisé à l'aide d'un dynamomètre de chez MTS System de type Synergie 200H en fixant dans un mors la plaque d'aluminium rigide et dans l'autre mors la feuille d'aluminium souple sur laquelle le dépôt a été effectué. Dans cette configuration, l'angle de pelage est de 180°. La vitesse de déplacement des mors est fixée à 100mm/min. Le Tableau III qui suit regroupe les résultats des tests d'adhésion pour les exemples de liant figurant dans le Tableau I. Le Tableau III montre que l'on obtient une adhésion améliorée avec l'ajout d'un copolymère acrylique contenant des groupements fonctionnels présentant une affinité pour les métaux ou aptes à se fixer sur les métaux à un polymère de fluorure de vinylidène. Il montre également que l'amélioration de l'adhésion est due au moins en partie aux groupements fonctionnels précités. Les résultats du Tableau III montrent enfin que la proportion de copolymère acrylique tel que précité peut aller au moins jusqu'à 20% en masse du liant et que plus cette proportion est élevée, meilleure est l'adhésion. Néanmoins, on constate une amélioration moindre de l'adhésion par rapport à l'augmentation de la quantité de copolymère acrylique tel que précité lorsque la proportion en masse de ce polymère acrylique atteint 10 %.

**Tableau III**

| | Force de pelage (N/25mm) |
|---|---|
| Exemple 1 | 0,85 ± 0,03 |
| Exemple 2 | 0,80 ± 0,07 |
| Exemple 3 | 0,65 ± 0,05 |
| Exemple comparatif 1 | 0,4 ± 0,05 |
| Exemple comparatif 2 | 0,25 ± 0,03 |
| Exemple comparatif 3 | 0,1 ± 0,03 |
| Exemple comparatif 4 | 0,45 ± 0,03 |

Les propriétés adhésives d'un mélange PVDF Kynar® HSV900/Kynar® 720 tel que divulgué dans le document EP 2953193 ont été également mesurées, comme indiqué dans le tableau IV ci-dessous :

**Tableau IV**

| | Force de pelage (N/25mm) |
|---|---|
| PVDF 2 | 0,25 ± 0,03 |
| Kynar® HSV900/Kynar® 720 1:1 | 0,15 ± 0,02 |
| PVDF 2 + 10% CMM | 0,4 ± 0,02 |
| Kynar® HSV900/Kynar® 720 1:1 + 10% CMM | 0,2 ± 0,05 |

Les résultats obtenus montrent que le mélange de PVDF Kynar® HSV900/Kynar® 720 ne permet pas d'obtenir des propriétés adhésives suffisantes pour l'application liant pour batterie lithium-ion.

**Mesure du gonflement dans l'électrolvte et taux de composés passant dans l'électrolyte (extractibles)**

La première étape pour la mesure de la prise en masse du liant dans l'électrolyte consiste à préparer un film libre de liant. Pour cela, on prépare une solution de liant polymère à 5% en masse dans la N-méthyl-2-pyrrolidone jusqu'à dissolution complète du liant polymère. Une quantité de solution est versée dans une boite de Pétri en verre de façon à avoir environ 20 milligrammes de solution par centimètre carré. Le solvant est ensuite évaporé en plaçant la boite de Pétri dans une étuve à 120°C pendant une nuit. Un film sec de liant est ainsi obtenu. Dix centimètres carrés sont découpés. L'échantillon est ensuite pesé. Sa masse est notée $M_0$. Ensuite, l'échantillon est immergé pendant 24 heures à 60°C dans un tube à essai contenant l'électrolyte constitué d'un mélange carbonate d'éthyle/carbonate de diméthyle /carbonate de di éthyle de composition massique 1/1/1. A l'issue des 24 heures, le film est sorti du tube à essai et essuyé sommairement pour retirer les gouttes d'électrolyte en surface. Il est ensuite pesé. Cette masse est notée $M_1$.

Ensuite, l'échantillon est immergé pendant 2 heures à température ambiante dans le carbonate de diméthyle. Puis il est séché dans une étuve à 120°C pendant 2 heures. A l'issue de cette étape, l'échantillon est pesé. Sa masse est noté $M_2$.

Le taux de gonflement ou prise en masse est calculé selon la formule suivante : $\frac{M_1-M_0}{M_0}$

Le taux d'extractible (ou taux de composés passant du liant dans l'électrolyte) est calculé selon la formule suivante :

$$\frac{M_0 - M_2}{M_0}$$

Ce protocole a été appliqué à la composition de l'exemple 2. Nous avons obtenu une prise en masse de 23% et un taux d'extractible de 2%.

## Revendications

1. Liant pour batterie lithium-ion et comprenant au moins un polymère de fluorure de vinylidène et au moins un copolymère acrylique comprenant des monomères comportant des groupements fonctionnels présentant une affinité pour les métaux ou aptes à se fixer sur les métaux, **caractérisé en ce que** ledit copolymère acrylique comprend des monomères comportant au moins un type de groupement fonctionnel choisi parmi les groupements suivants : carboxyle, anhydride d'acide carboxylique, époxy, mercapto, sulfure et phénolique et **en ce que** ledit polymère de fluorure de vinylidène est tel qu'une solution de N-méthyl-2-pyrrolidone contenant 5% en masse dudit polymère de fluorure de vinylidène présente une viscosité, mesurée à 23°C avec une vitesse de cisaillement imposée de 30 tours/min, égale ou supérieure à 125 mPa.s, de préférence égale ou supérieure à 300 mPa.s, avantageusement égale ou supérieure à 700 mPa.s, et inférieure à 1500 mPa.s, et de préférence inférieure à 1200 mPa.s.

2. Liant selon la revendication 1, **caractérisé en ce que** ledit polymère de fluorure de vinylidène est tel que ladite viscosité de ladite solution de N-méthyl-2-pyrrolidone contenant 5% en masse dudit polymère de fluorure de vinylidène est égale à 150 mPa.s ou égale à 700 mPa.s.

3. Liant selon l'une quelconque des revendications précédentes, **caractérisé en ce que** ledit copolymère acrylique est un copolymère de méthacrylate de méthyle et d'acide méthacrylique.

4. Liant selon l'une quelconque des revendications précédentes, **caractérisé en ce que** ledit copolymère acrylique contient 10% en mole de monomères portant des groupements fonctionnels présentant une affinité pour les métaux ou aptes à se fixer sur les métaux et notamment 10% en mole de groupements acide méthacrylique.

5. Liant selon l'une quelconque des revendications précédentes, **caractérisé en ce qu'**il contient en masse un taux de copolymère acrylique égal ou supérieur à 0,1% et égal ou inférieur à 25%, de préférence égal ou inférieur à 20% et de préférence inférieur à 10%.

6. Electrode pour batterie lithium-ion du type comportant un collecteur métallique dont au moins une face est recouvert d'une couche de substrat contenant une substance active et un liant, **caractérisé en ce que** ledit liant est selon l'une quelconque des revendications 1 à 5.

7. Electrode selon la revendication 6, **caractérisée en ce que** ledit substrat contient en masse un taux dudit liant égal ou supérieur à 1% et égal ou inférieur à 5% et notamment égal à 3% .

8. Electrode selon l'une des revendications 6 ou 7, **caractérisée en ce que** ledit substrat contient en tant que substance active un oxyde métallique lithié et éventuellement du noir de carbone.

9. Electrode selon l'une des revendications 6 ou 7, **caractérisée en ce que** ledit substrat contient en tant que substance active au moins un ingrédient choisi parmi le coke, le noir de carbone, le graphite le charbon actif, et les fibres de carbone.

## Patentansprüche

1. Bindemittel für Lithiumionenbatterie, und umfassend mindestens ein Vinylidenfluoridpolymer und mindestens ein Acryl-Copolymer, umfassend Monomere, die funktionelle Gruppen einschließen, die eine Affinität für Metalle aufweisen oder geeignet sind, sich an Metalle zu binden, **dadurch gekennzeichnet, dass** das Acryl-Copolymer Monomere umfasst, die mindestens eine Art funktioneller Gruppe, ausgewählt aus den folgenden Gruppen, enthalten: Carboxy, Carbonsäureanhydrid, Epoxy, Mercapto, Schwefel und Phenol, und dadurch, dass das Vinylidenfluoridpolymer derart ist, dass eine Lösung von N-Methyl-2-pyrrolidon, die 5 Massen-% des Vinylidenfluoridpolymers enthält, eine bei 23 °C mit einer auferlegten Schergeschwindigkeit von 30 Umdrehungen/min gemessene Viskosität gleich oder größer als 125 mPa.s, vorzugsweise gleich oder größer als 300 mPa.s, vorteilhafterweise gleich oder größer als 700 mPa.s und kleiner als 1.500 mPa.s und vorzugsweise kleiner als 1.200 mPa.s aufweist.

2. Bindemittel nach Anspruch 1, **dadurch gekennzeichnet, dass** das Vinylidenfluoridpolymer derart ist, dass die Viskosität der 5 Massen-% des Vinylidenfluoridpolymers enthaltenden Lösung von N-Methyl-2-pyrrolidon gleich 150 mPa.s oder gleich 700 mPa.s beträgt.

3. Bindemittel nach einem der vorstehenden Ansprüche, **dadurch gekennzeichnet, dass** das Acryl-Copolymer ein Copolymer von Methylmethacrylat und Methacrylsäure ist.

4. Bindemittel nach einem der vorstehenden Ansprüche, **dadurch gekennzeichnet, dass** das Acryl-Copolymer 10 Mol-% Monomere enthält, die funktionelle Gruppen tragen, die eine Affinität für Metalle aufweisen oder geeignet sind, sich an Metalle zu binden, und insbesondere 10 Mol-% an Methacrylsäuregruppen.

5. Bindemittel nach einem der vorstehenden Ansprüche, **dadurch gekennzeichnet, dass** es einen Acryl-Copolymer-Anteil gleich oder größer als 0,1 Massen-% und gleich oder kleiner als 25 Massen-%, vorzugsweise gleich oder kleiner als 20 Massen-% und vorzugsweise kleiner als 10 Massen-% enthält.

6. Elektrode für Lithiumionenbatterie der Art, die einen metallischen Stromsammler einschließt, von dem mindestens eine Fläche mit einer Substratschicht bedeckt ist, die eine aktive Substanz und ein Bindemittel enthält, **dadurch gekennzeichnet, dass** das Bindemittel nach einem der Ansprüche 1 bis 5 ist.

7. Elektrode nach Anspruch 6, **dadurch gekennzeichnet, dass** das Substrat einen Anteil des Bindemittels gleich oder größer als 1 Massen-% und gleich oder kleiner als 5 Massen-% und insbesondere gleich 3 Massen-% enthält.

8. Elektrode nach einem der Ansprüche 6 oder 7, **dadurch gekennzeichnet, dass** das Substrat als aktive Substanz ein lithiiertes Metalloxid und gegebenenfalls Ruß enthält.

9. Elektrode nach einem der Ansprüche 6 oder 7, **dadurch gekennzeichnet, dass** das Substrat als aktive Substanz mindestens einen Bestandteil enthält, ausgewählt aus Koks, Ruß, Graphit Aktivkohle und Kohlenstofffasern.

**Claims**

1. A binder for a lithium-ion battery and comprising at least one vinylidene fluoride polymer and at least one acrylic copolymer comprising monomers including functional groups having an affinity for metals or able to fix on metals, **characterized in that** said acrylic copolymer comprises monomers including at least one type of functional group chosen from among the following groups: carboxyl, carboxylic acid anhydride, epoxy, mercapto, sulfide and phenolic and **in that** said vinylidene fluoride polymer is such that a solution of N-methyl-2-pyrrolidone containing 5% by weight of said vinylidene fluoride polymer has a viscosity, measured at 23°C with an imposed shear rate of 30 revolutions/min, equal to or greater than 125 mPa.s, preferably equal to or greater than 300 mPa.s, advantageously equal to or greater than 700 mPa.s, and less than 1500 mPa.s, and preferably less than 1200 mPa.s.

2. The binder according to claim 1, **characterized in that** said vinylidene fluoride polymer is such that said viscosity of said solution of N-methyl-2-pyrrolidone containing 5% by weight of said vinylidene fluoride polymer is equal to 150 mPa.s or equal to 700 mPa.s.

3. The binder according to any one of the preceding claims, **characterized in that** said acrylic copolymer is a methyl methacrylate and methacrylic acid copolymer.

4. The binder according to any one of the preceding claims, **characterized in that** said acrylic copolymer contains 10 mol% of monomers bearing functional groups having an affinity for metals or able to fix on metals and in particular 10 mol% of methacrylic acid groups.

5. The binder according to any one of the preceding claims, **characterized in that** it contains by weight a level of acrylic copolymer equal to or greater than 0.1% and equal to or less than 25%, preferably equal to or less than 20% and preferably less than 10%.

6. An electrode for a lithium-ion battery of the type including a metal collector, at least one face of which is covered by a substrate layer containing an active substance and a binder, **characterized in that** said binder is according to any one of claims 1 to 5.

7. The electrode according to claim 6, **characterized in that** said substrate contains by weight a level of said binder equal to or greater than 1% and equal to or less than 5%, and in particular equal to 3%.

**8.** The electrode according to one of claims 6 or 7, **characterized in that** said substrate contains as active substance a lithiated metal oxide and optionally carbon black.

**9.** The electrode according to one of claims 6 or 7, **characterized in that** said substrate contains as active substance at least one ingredient chosen from among coke, carbon black, graphite activated carbon, and carbon fibers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2001043214 A
- WO 9850479 A
- WO 9732347 A
- WO 9749777 A
- US 2013252077 A
- EP 2953193 A
- WO 9727260 A